# EUROPEAN PATENT SPECIFICATION

(11) **EP 2 774 480 B1**
(45) Date of publication and mention of the grant of the patent: **07.10.2020**
(21) Application number: 14158237.9
(22) Date of filing: 07.03.2014
(51) Int. Cl.: A01K 13/00, A01L 3/00

(54) **Shoe for use on animals**
Schuh zur Verwendung bei Tieren
Chaussure pour utilisation sur des animaux

(30) Priority: 08.03.2013 NO 20130355
(43) Date of publication of application: 10.09.2014
(73) Proprietor: Equine Fusion AS, 4042 Hafrsfjord (NO)
(72) Inventor: Revheim, Svein, N-4042 Hafrsfjord (NO); Revheim, Svein Erik, N-4007 Stavanger (NO); Nordhuus, Jørgen, N-4018 Stavanger (NO)
(74) Representative: Håmsø Patentbyrå AS

(56) References cited:
- FR-A1- 2 319 297
- GB-A- 2 432 293
- US-B1- 7 032 367

## Description

### Introduction

The invention relates to a shoe for the foot of an animal, which has a tightening mechanism that acts to give a snug stable fit around the foot.

### Background

Different utility animals have at times a need to protect their feet by using socks or shoes. Larger animals as, for instance, a hoofed animal, and in particular a horse, usually use horseshoes of iron. Such shoes do not, however, maintain the important biomechanical function that the hooves of a horse have. In the further description the horse will be used as an example of an animal on which the invention can be used.

A horse is often referred to as an animal with five hearts, and this is because the hooves constitute a major part of the circulatory system for pumping blood around the animal's body. The hooves expand when the horse steps down and contract when the horse removes weight from the hoof. It is this pumping function that is the biomechanical function, where changes in mechanical impact on the down step and the up step directly strengthen and contribute to the horse's blood circulation.

The hoof is therefore an extremely important "organ" for the horse's wellbeing. The hoof has a great capacity for self-repair. Only the kidneys and the liver have equally important functions in the horse's body. All regeneration of tissue, horn and other structures of the hoof are completely dependent on a constant supply of nourishment via the flow of blood through the hoof for this process to function optimally.

Genetically, a horse is not made to use man-made shoes. Nature has made the hoof such that it maintains correct ergonometry according to the type of surface on which it is used. A hoof is exposed to natural wear during use, and will grow and take shape according to the type of use. A change in the natural shape of a hoof will have an unknown impact and effect on the hoof and the parts directly or indirectly affected by a change from the natural development that normally takes place.

The use of shoes for horses is generally associated with iron shoes that are fixed to the hoof with nails or rivets. This is an old method that has been controversial since this method inhibits and places restrictions on the natural growth and shape of the hoof.

As mentioned above, the hooves have a major effect on the blood circulation, and thus the general condition of a horse. A hoof grows constantly and a rigid form such as an iron shoe inhibits growth of new hoof tissue. The hoof does not acquire its natural shape according to the horse's own movement and wear of the hoof. Iron shoes give little or no shock absorption, such that the use of iron shoes will often result in damage to the tendons and muscles of the horse. Furthermore, the horse's hoof is prevented from expanding, such that iron shoes will not allow the said pumping function in the hoof. Iron shoes also pose risks because the horse may sustain a nail prick. That means to say that the horse has the nail in the shoe driven in incorrectly so that the nail penetrates into the corium which is enervated. Alternatively, the horse may end up with nail bind, which means to say that the nail presses on the nerves. These conditions result in the horse becoming lame until the nail has been removed and the injury has healed.

Mounting horseshoes is also a time-consuming process. An iron shoe is heavy on the hoof, which means that a horse using such a shoe will normally lift his leg higher than necessary and thus use muscles in a slightly different way than if it had not been wearing shoes. The horseshoe is not the result of scientific developments which take into account the good of the horse. Rather it is an old solution that causes more problems than it solves. Furthermore, horseshoes are unsuitable for use on hard smooth surfaces such as asphalt.

From a safety point of view, a traditional horseshoe is also associated with a risk for both horse and rider when used on, for example, a hard flat surface such as rock or asphalt, since the horseshoe may easily slide on such a surface.

A hoof which is shod for years loses its original shape, function and sensitivity. The hoof becomes soft and tolerates less than the hooves of barefoot horses which are not shod with iron shoes. Barefoot horses, on the other hand, develop a natural hoof mechanism, the hooves tolerate more and the hardness in the hooves becomes stronger than in the case of horses that use iron shoes. The hoof wall grows down from the coronet band (the hair line) at an average rate of 7 mm per month. When the shoes are removed, the horse has better circulation in the hoof. The corium, which is a spongy, vascularised layer, allows the horn substance to receive more nutrients and begin to produce a high-quality hoof wall, frog and hoof sole. After about one and a half years, the whole hoof will be made of this quality horn, and the hoof will be worn and shaped in accordance with the natural movement that each individual horse has.

Just a few years ago there was no question of taking the iron shoes off a competition horse. Most people knew little of what would happen. Today there are barefoot horses that go unshod in all disciplines and events.

For many years, it has been common to experience a difficult transitional period after shoes were removed. An unpredictable period both as regards time and soreness became a bar to many who were considering switching to barefoot horses. With more insight into trimming and with the use of new lighter horseshoes of plastic, virtually all horses can return to work or training after the iron shoes have been taken off.

Attempts have also been made to make horseshoes which for a horse would feel almost like being barefoot. These are generally light horseshoes made of aluminium and carbide, and where there is a Teflon sole that is adapted and glued to the underside of the hoof. This will mean that the expansion function of the hoof will work satisfactorily inasmuch as the underside of the Teflon sole will slide against the top of the horseshoe. However, this is a demanding mounting process that is difficult to accomplish in a satisfactory manner.

The transition from shod horse to barefoot horse may be time-consuming since the horse will regain sensitivity in the hoof, and have a soft hoof quality, which leads to the horse becoming footsore and lame, especially during riding on gravel and asphalt.

Several players are in this connection using new products that have come onto the market, such as shoes that can be put on for riding and be taken off when riding is over. These shoes are often made of rubber/plastic in a rigid form and they have an adjusting mechanism for screws or the like for fastening the shoe to the hoof. Recently, several types of shoes of plastic or rubber have been developed that are slipped onto the hoof and are fastened using different methods. This new type of rubber or plastic shoe is much used in distance riding and during rehabilitation of hooves. They are also used if a barefoot horse is going to be ridden on coarse gravel or sharp stones, which may be painful when the horse begins to regain feeling and function in the hoof.

One of the disadvantages of the new plastic-rubber shoes is that they depend on the horse stepping sufficiently into them, or that the person who puts them on uses enough force to press the foot into them.

When a shoe is pressed over a hoof, many horses will become uneasy and restless, which may result in a risk for the person shoeing the horse, especially as when the person is bent over the hoof, he is in an exposed position and may easily be kicked by the horse. Said shoes are made of a material that is drawn together over the hoof and expands when the tightening mechanism is loosened. Since the hoof is slipped into the shoe and since the shoe also tries to expand, the shoes easily fall off during use.

A hoof moves a great deal during riding and there will be much wear of both hoof and shoe as the hoof slides within the shoe. The actual sole of the shoe and the hoof will suffer from friction wear. Furthermore, it is the case that when the shoe is fastened around the upper part of the hoof by means of screws, steel wire or similar fastening means, the shoe might easily fall off during riding and parts may be lost whilst the shoe may be destroyed.

Shoes are exposed to substantial forces as a horse moves. If the shoe falls off, this could cause safety problems, as the horse may stumble on the shoe, turn its ankle or fall, the rider may fall off and horse and rider may thus incur serious injuries. This is a serious safety problem for both horse and rider. The chance of screws loosening and shoes falling off and resulting in serious injury in connection with a fall or turning an ankle is significant with today's fastening means, mounting and removal.

Furthermore, with today's shoes it cannot be seen how the hoof is placed inside the shoe, and thus whether the shoe is adequately adapted to the hoof. It is not possible to tell if the shoe pinches or is ill-fitting for the horse. The shoe is made in a rigid form which means that the horse's natural expansion and contraction of the hoof is not provided for. Since a hoof seeks to expand during the down step, a hard plastic material without elastic properties or which does not yield mechanically to impact will not give the hoof much better support than iron shoes.

Shoeing a horse should ideally be a matter of following the horse's own anatomy and making it as comfortable as possible for the horse when shoes are used. Furthermore, shoeing a horse should take into account the horse's anatomical function, and its natural hoof movement, which provides a biomechanical function, should be disturbed as little as possible. A hoof has sensitive parts, and shoes made in a rigid form create a problem in particular across the horse's heel.

Shoes that are used today do not take into account the horse's heel in either form or function. No attempt has been made to relieve the pressure from the shoe on the heel, for example, by means of an alternative tightening mechanism or the like, and the hoof is thus exposed to the same pressure on its sensitive parts as on the actual hoof wall which tolerates this pressure. The horse is thus exposed to an unnatural pressure on the heel and on the soft skin that runs from the foot down to the hoof. This can cause discomfort like that experienced by people when wearing shoes that are too small. Today, shoes for use on a horse do not have any form of impact or shock absorption system to deal with the enormous stresses to tendons and joints incurred by a horse during demanding riding such as show jumping and the like. In show jumping where a horse lands on its front legs with its own weight as well as that of the rider, the horse will be subjected to a great deal of wear.

Shoes for hoofed animals of a closed type, as in the prior art, do not take into account that heat and sweat will be generated in the shoe, and this will be a problem, in particular when the animal is active. Sweat might in turn lead to irritation of the skin and consequential soreness, tenderness and blisters, which is aggravated by frictional forces since the foot is not completely stationary inside a shoe of known type.

Many people are injured each year in connection with riding, care and shoeing of hoofed animals. Hoofed animals and in particular horses might become restless if shoeing them takes an unduly long time and requires much holding of feet/hooves. This will generally be difficult for the animal and for the person performing the shoeing. Since it is not unusual for the person shoeing an animal to be subjected to accidents during shoeing, it would be desirable that work in connection with shoeing is quick, simple and not least safe.

In the Applicant's own patent NO 332100 B1 a sole and an upper part are described which together form a shoe for the foot of an animal, such as a horse. The design described here solves the aforementioned problems by means of a sole that, inter alia, maintains a stable and unchanged position between the foot and the sole independent of the surface, and independent of whether the foot is loaded, and furthermore where the sole preserves the natural biomechanical hoof function. The sole which, together with an upper part, constitutes a shoe can be made very light so that in use it will not inhibit the animal's natural movements. Furthermore, it has properties that make it useful for all types of use and surface and is quick and easy to mount and tighten.

The said shoe has a tightening mechanism for tightening the parts on either side of lateral slits towards each other so that the upper part closes around the foot on which the sole is mounted.

However, it has been seen that there is a need for a new type of tightening mechanism which, first of all, makes the shoe more flexible as regards adjustment of the shoe to different shapes of feet, or hooves in the case of horses. Secondly, there is a need for a tightening mechanism which is capable of optimal adjustment of different models of shoe for one and the same foot/hoof. Because of safety requirements, it is further desirable to have quick mounting and removal of shoes, which is rendered possible by the invention.

The invention makes it possible to realise different models with the special tightening mechanism, where the models are adapted according to the area of use and requirements as regards protection in different disciplines as, for instance, hobby use, trotting and long distance.

The invention permits a shoe with a given sole size and upper part shape to be adjusted and fit snugly around different hooves with different hoofprints and different diameter of the upper part. It is the tightening mechanism on the shoe which, on tightening, will ensure a snug fit to the hoof independent of hoof geometry and thus provide a shoe that is adaptable to different hooves.

Patent documents FR2,319,297 and US1,043,978 show different horse boots. Other examples of horse boots are disclosed in GB2,432,293A and US7,032,367B1.

### Brief description

The invention is defined by the independent claim. The dependent claims define advantageous embodiments.

The present invention is described by means of a shoe for the foot of an animal, the shoe comprising a sole and an upper part that are connected to each other, and where the upper part comprises an opening with a tightening mechanism for tightening the shoe against the foot. The tightening mechanism cooperates with at least one attachment part that is fastened to a toe portion or heel portion of the sole, wherein the at least one attachment part is located lower than the tightening mechanism in the upper part such that, on tightening, the upper part is drawn down against the sole to give a snug fit around the foot, and wherein the tightening mechanism is arranged in the upper part above the same toe portion or heel portion that the at least one attachment part is secured to.

### Detailed description

The invention will now be described in detail with reference to the figures, wherein:
Figure 1 is a side view the principle of the tightening mechanism with the attachment part for a shoe;
Figure 2 is a front view the principle of the tightening mechanism with the attachment part for a shoe;
Figure 3 is a side view of a high type of shoe with the tightening mechanism at the front;
Figure 4 is a front view of a high type of shoe with the tightening mechanism at the front;
Figure 5 is a side view of a low type of shoe with the tightening mechanism at the back;
Figure 6 is a front view of a low type of shoe with the tightening mechanism at the back;
Figure 7 is a front view of details of the tightening mechanism with hook closure levers; and
Figure 8 is a top view of details of a tightening mechanism with hook closure levers.
Figure 9 is a side view illustrating the tightening mechanism prior to the tightening thereof.
Figure 10 is a side view illustrating the shoe after the tightening mechanism has been tightened.
Figure 11 is a front view illustrating the effect of the tightening mechanism.
Figure 12 is a top view illustrating the tightening mechanism prior to the tightening thereof.
Figure 13 is a top view illustrating the shoe after the tightening mechanism has been tightened.
Figure 14 is a top view illustrating another embodiment of the shoe after the tightening mechanism has been tightened.
Figure 15 is a side view showing a further embodiment of the shoe in an open position.
Figure 16 is a front view showing a further embodiment of the shoe in an open position.
Figure 17 is a front view showing a further embodiment of the shoe in a tightened position.
Figure 18 is a side view showing a further embodiment of the shoe in a tightened position.
Figure 19 is a top view showing a further embodiment of the shoe in a closed position.

Recently a new type of shoe has been developed for animals, which is highly suitable for horses. The shoe is described by a sole which, together with an upper part, constitutes a shoe that can be made extremely light and such that in use it will not hamper the natural movements of the animal. It has additional properties which mean that it can be utilised for all kinds of use and surfaces and is quick and easy to mount and tighten.

However, there has been a need to find an improved solution for tightening the shoe to a hoof such that a shoe of a given size of sole and upper part can fit several different shapes of hoof and at the same time sit quite firmly without the shoe changing its position relative to the foot during use.

The present invention solves this problem, and is described by a shoe for the foot of an animal, the shoe comprising a sole and an upper part that are connected to each other, and where the upper part comprises an opening with a tightening mechanism for tightening the shoe against the foot.

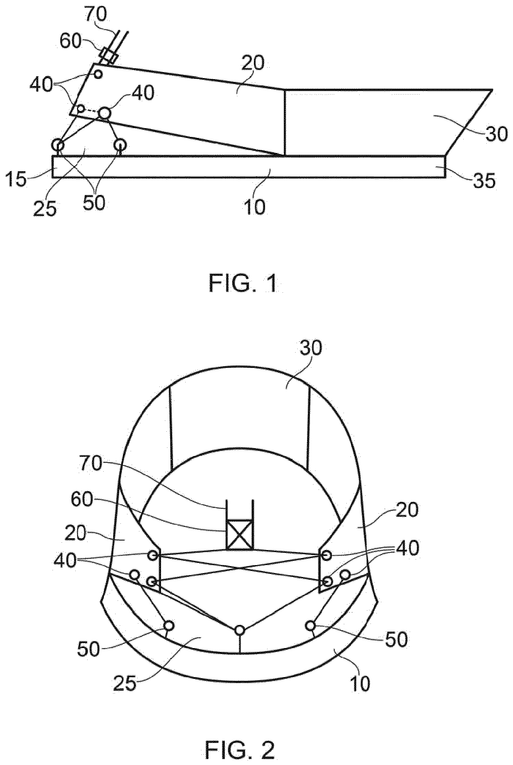

Figures 1 and 2 show the principle of the tightening mechanism with the attachment part for a shoe. Figure 1 is a side view of a shoe, whilst figure 2 is a front view of a shoe.

The shoe comprises a sole 10 and an upper part 20 which are connected to each other, and where the upper part 20 comprises an opening and a tightening mechanism 70 to tighten the shoe against the foot 5. The shoe is characterised in that the tightening mechanism 70 cooperates with least one attachment part 50 that is fastened to toe portion 15 or heel portion 35 of the sole 10, and where the at least one attachment part 50 is located lower than the tightening mechanism 70 in the upper part 20, such that the upper part 20 is drawn down towards the sole 10 on tightening in order to give a snug fit around the foot 5.

By tightening mechanism 70 is meant the parts of the shoe which, together, will ensure that the shoe can be tightened snugly around the foot 5 after the shoe has been put on. The upper part 20 of the shoe is that part of the shoe that is above the sole 10 and which comprises a part that can be drawn in so that the shoe is tightened against the foot 5. Different tightening mechanisms 70 can be used, such as a shoelace, hook closure lever and hook-and-loop fastener. Laces or cords may be combined with a toggle cord lock 60. It is equally possible to use other types of mechanical tightening mechanisms as well as chemical tightening mechanisms. The tightening mechanism provides for a tightening of the shoe around the foot and locks the tightened parts in this tightened position for a period of use of the shoe.

The fact that there is an attachment part 50 that is located lower than the tightening mechanism 70 means that the sole 10 can be adjusted and tightened around a hoof even though the sole 10 at the outset is too big for the hoofprint. It will thus be possible to use a shoe with a fixed given size on hooves of different sizes.

In one embodiment of the invention, the upper part 20 comprises an opening with a tightening mechanism 70 that is separate from a toecap part 25 of the upper part 20 such that, on tightening, the upper part 20 fits snugly around the foot 5 independent of the diameter of the foot 5 and the foot's 5 print in the sole 10.

In other embodiments the upper part 20 is separate from the toe portion 15 or the heel portion 35 of the sole. When there is a separation between the upper part and the heel or toe portion to which the attachment part is secured the movement of the upper part in the direction of the attachment part during tightening is les restricted by the material of the upper part.

The tightening mechanism 70 is arranged in the upper part 20 above the same toe portion 15 or heel portion 35 that the at least one attachment part 50 is secured to. Accordingly if the opening and the tightening mechanism are arranged in the front part over the toe part the attachment part is secured to the tor part. If the tightening mechanism is arranged in the heel section of the upper part then the attachment part is secured to the heel part.

This characteristic feature of a separate toecap 25 from the upper part 20 will, together with the said characteristic feature of attachment part 50 in toe portion 15 of the sole 10, ensure that both sole 10 and upper part 20 of a shoe of a given size and shape will be adjustable to hooves of different shapes.

In addition to being adjustable to different hooves, the shoe will also be tightened snugly against different parts of the hoof when the tightening mechanism is tightened.

A shoe according to the invention can be made having different hardness of the sole 10. When a soft sole 10 is used, the upper part 20 and the sole 10, on tightening, will be drawn towards each other, whilst when a hard sole 10 is used, only the upper part 20 will be drawn down towards the sole 10 on tightening.

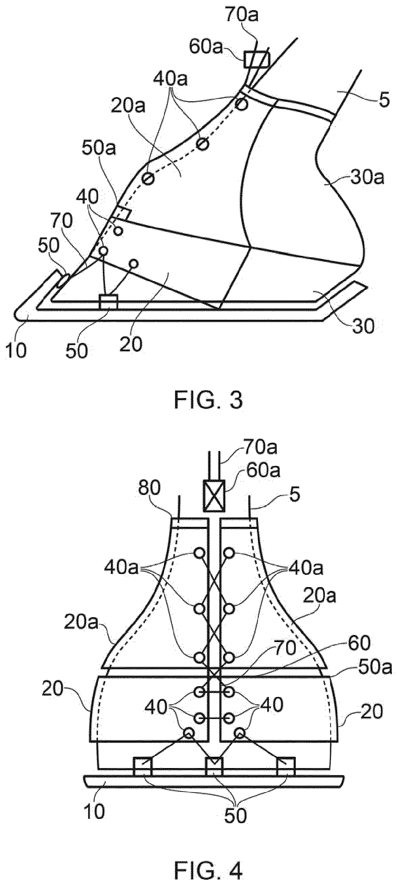

In an embodiment of the shoe, the tightening mechanism of the shoe 70 consists of laces that are threaded through guiding elements 40 on either side of the opening in the upper part 20, and further through said at least one attachment part 50 in the toe portion 15 and/or heel portion 35 of the sole 10. When a lace is threaded through one or more attachment parts 50 in toe portion 15, the toe portion 15 and the upper part 20 where the tightening mechanism 70 is located will, on tightening, be drawn towards each other. Similarly, the heel portion 35 and the heelcap part 30 of the upper part 20 will be drawn towards each other on tightening when a tightening mechanism 70 is connected to an attachment part 50 in the heel portion 35. This is described in more detail with reference to Figure 4.

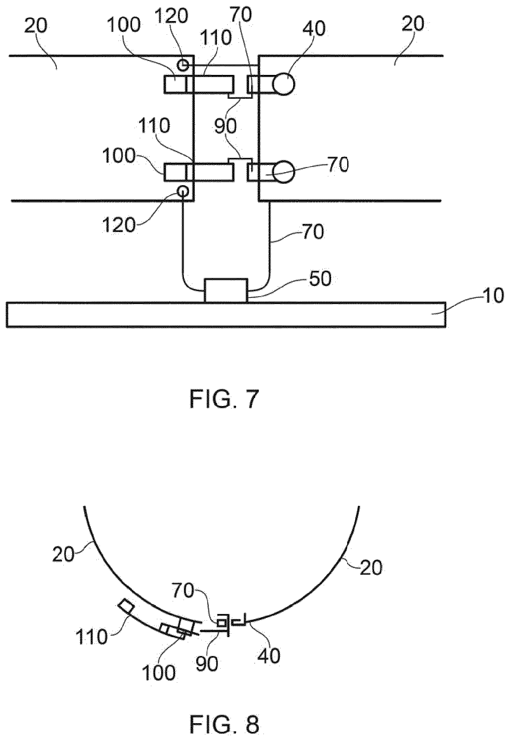

In another embodiment of the shoe, the tightening mechanism 70 comprises hook closure levers 110 (Fig. 7). These can be of the type that can be tightened with different tightening strengths in that the hook closure lever 110 has different notches which give different tightening strengths. In order that the upper part 20 can be drawn down towards the toe portion 15 or the heel portion 35 on tightening, there is a connecting mechanism from one or more hook closure levers 110 to the attachment part 50 in the toe portion 15 or the heel portion 35. This will be explained in more detail below with reference to Fig. 7.

In an embodiment of the shoe, there is a friction material on the inside of the upper part 20 so that this part is prevented from sliding against the upper side of the hoof. This will be of particular importance for a low type of shoe. The friction material may, for example, consist of chemical materials that are soft and will mould themselves around the hoof, such as glue. It may also consist of hard materials that are described in that they are harder than the hoof, and will therefore provide friction in that they are pressed a little into the hoof.

The shoe according to the invention can be made in a high or low embodiment which will be described in more detail below with reference to figures.

In an embodiment, the upper part 20 is made of a flexible material and/or hard material, such that the upper part 20 fits snugly around the foot 5 independent of the geometry of the foot 5 and will generally in addition prevent rotation of the shoe around the foot 5. Soft material will change shape and adapt itself to the hoof, and it will also be able to move according to the contours of the foot or hoof. Hard material is characterised in that it has an original shape that cannot be changed independent of the shape of the foot or hoof.

In yet another embodiment of the shoe, at least one attachment part 50 is mounted on a slide or hinge so as to allow the attachment part 50 to move in a longitudinal direction to reach a tightening point on the sole 10 that rests against the hoof independent of the size of the sole 10. This feature will contribute to further flexibility as regards the adjustment of a specific shoe of a given size to different hoof sizes and shapes.

In what follows several implementations of the invention will be described with reference to figures.

Figures 3 and 4 show a high type of shoe for a foot 5 with tightening mechanism 70 at the front. Figure 3 is a side view of the shoe, whilst Figure 4 is a front view thereof.

A high type of shoe is a shoe where the upper part 20 comprises a high upper part 20a which goes over bulbs at the back of a hoof. High shoes will preferably have a tightening mechanism 70 at the front of the shoe as shown in the figures.

All the lower parts of the shoe as they form the invention will be recognised from Figures 3 and 4. In addition, the embodiment of the example of implementation of a high type of shoe comprises an upper tightening mechanism 70a which comprises laces, an upper toggle cord lock 60a and an upper guiding element 40a. The figures show in addition a top upper part 20a and an upper heelcap part 30a which is preferably made of an elastic material.

The upper tightening mechanism 70a, which in the figures consists of laces, is threaded through upper guiding elements 40a which typically are holes for laces. The laces pass on through at least one upper attachment part 50a in the upper part 20, and further through guiding element 40 in upper part 20. In this example which includes the use of laces, the guiding elements 40 are holes. Lastly, the lace is fastened to at least one attachment part 50 that is connected to the sole part.

On tightening the upper tightening mechanism 70a, the top upper part 20a will be drawn down against the upper part 20, which in turn will be drawn down towards the sole 10. This will ensure a shoe with a snug fit around the foot 5 on which it is placed.

Figure 4 also shows a top upper part cover 80 which is preferably made of a flexible material to prevent the penetration of water and mud.

A high shoe aims at allowing the hoof to move ergonomically correct in all movements with maximum protection without resulting in blisters or other unintended inconveniences for the horse.

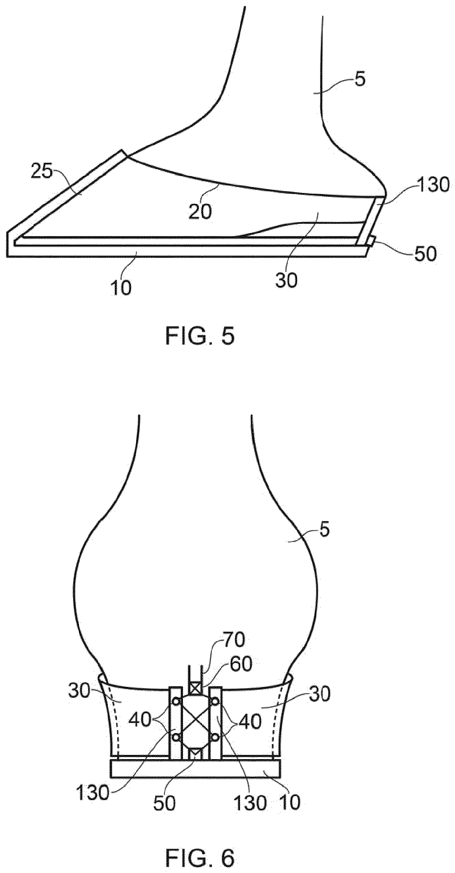

Figures 5 and 6 show a low type shoe for a foot with tightening mechanism 70 at the back. Figure 5 is a side view of the shoe, whilst figure 6 is a front view thereof.

A low shoe is characterised in that it is adapted to the nail part of the hoof, without protection of the soft part of the hoof. This is so that the shoe does not get in the way of movement of, for example, hoof bones, pastern etc. This is useful in, for example, trotting, galloping and on the track where functionality is important and where the requirements for protection otherwise are small.

A low type of shoe is a shoe where the upper part 20 passes under the bulbs at the back of the hoof. Low shoes will preferably have a tightening mechanism 70 at the back of the shoe as shown in the figures, but they can also have the tightening mechanism at the front.

From Figure 5 it is seen that the toecap part 25 is closed unlike the shoe of the high type shown in Figures 3 and 4. The tightening mechanism 70 is seen at the back of the shoe and details thereof are shown in Figure 6. In one embodiment there is a rigid attachment slide 130 on either side of the opening of a heelcap part 30 of the upper part 20 of the shoe. This will ensure that the forces that occur during tightening are distributed evenly along the opening. Furthermore, a tightening mechanism 70 is shown which comprises laces or cords with a toggle cord lock 60.

Figure 7 shows details of a tightening mechanism 70 according to the invention. The description of the tightening mechanism 70 above has focussed on the use of laces or cords. However, there are other types of tightening mechanisms 70 that are suitable for use on the present invention. The figure is a front view of a tightening mechanism 70 with hook closure levers 110. On one side of the opening in the upper part 20, hook closure anchors 100 are secured which hold hook closure levers 110, whilst secured on the other side are hook closure fasteners 90 which are passed through guiding elements 40, and where the hook closure fasteners 90 are connected to straps that are passed through the attachment part 50 in the sole 10 and where the end of the strap has an attachment 120 on one side of the opening. The figure shows an embodiment with two hook closure levers 110. The uppermost hook closure lever 110 will tighten the two parts of the upper part 20 together. The lowermost lever will ensure that the upper part 20 is drawn down towards the sole 10 when the hook closure lever 110 is closed and thus tightens the hook closure fastener 90 that is included in the tightening mechanism 70.

Figure 8 is a top view of details from Figure 7.

As can be seen from the examples above which include different tightening mechanisms 70, the essence of the present invention is that the tightening mechanism 70 cooperates with at least one attachment part 50 that is fastened to a toe portion 15 or a heel portion 35 of the sole 10. The effect of this feature is that a shoe can be tightened and made to fit snugly around a foot 5 even if the shoe at the outset is not especially made to fit a specific foot 5 or hoof.

A further improved fit of the shoe will be obtained when the opening with tightening device 70 in addition is separate from the toecap part 25, the toe portion 15 or the heel portion 35. Such an embodiment of the invention will contribute to both the sole 10 and upper part of the shoe fitting very snugly around a foot 5 or hoof. These features can be further combined with a friction material on the inside of the upper part 20. The shoe according to the invention will maintain a very stable position even during hard use.

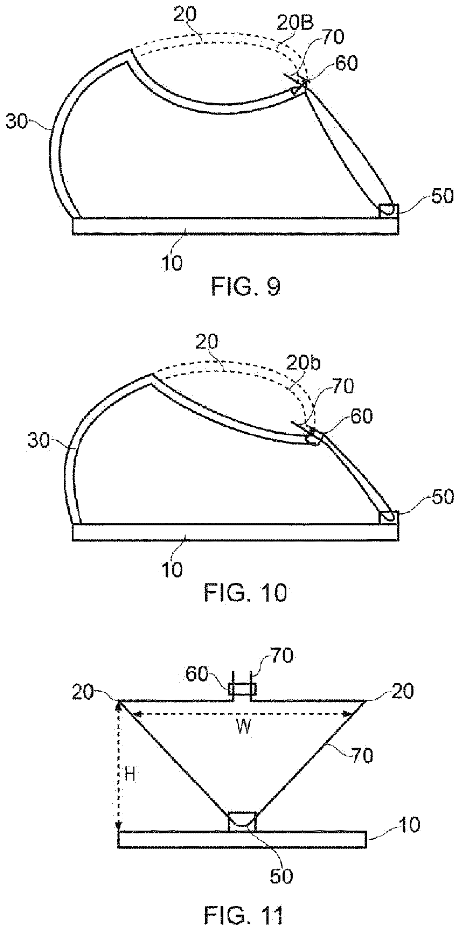

Figures 9 and 10 illustrate the effect of the tightening via the attachment part 50. Illustrated is a simple form of a high shoe, with a sole 10, an upper part 20 and with a heel part 30 covering the convex heel bulb. The broken line illustrates the part of the top circumference of the upper part 20B which is normally not visible in a side view. The attachment part 50 is secured to the toe portion 15. The tightening mechanism 70 comprising a cord lock 60 is arranged in the upper part above the toe portion that is to say on the same side as the attachment part 50. Figure 9 illustrates the shoe before the tightening via the attachment part 50, whereas figure 10 illustrates the shoe after tightening via the attachment part 50. When the shoe is tightened the upper part 20 including the upper rim 20B is drawn down and towards the attachment part 50. This provides a snug fit of the shoe to the foot. In the illustrated embodiment the heel part 30 and the upper part 20 can all be made of strings, such as shoelaces, and they all form part of the tightening mechanism when the shoe is tightened around a foot.

Figure 11 illustrates the tightening mechanism in a front view. When the string 70 is tightened and locked by cord lock 60 both the width W and the height H are adjusted thereby the shoe is fitted to the foot. Here the tightening of the cord/lace results in tightening in both directions W and H at the same time.

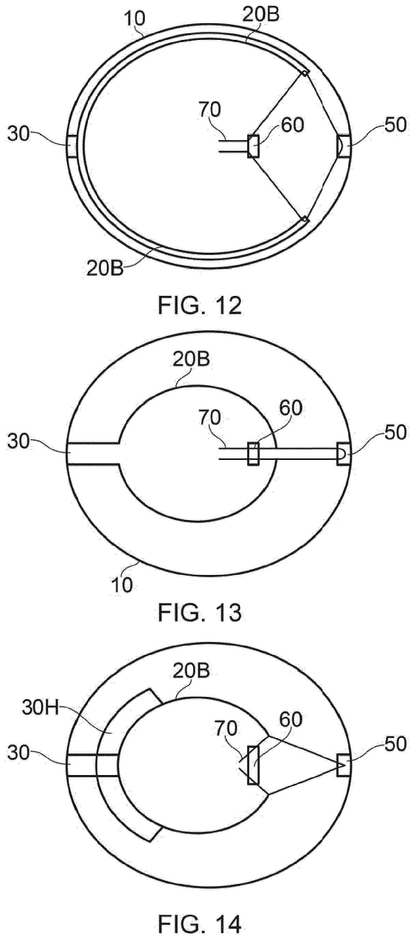

Figures 12 and 13 show the shoe as a top view, figure 12 in a non-tightened state and figure 13 in a tightened state. The circumference 20B is being reduced when the tightening mechanism 70 is tightened.

Figure 14 illustrates an embodiment wherein the upper part of the heel 30 is made of an elastic material 30H thereby making the circumference or rim 20B more flexible. This protects the soft parts of the foot during ware. The elastic heel 30H will flex together with the hoof bone and pastern bones so that pressure against the joints and skin are avoided.

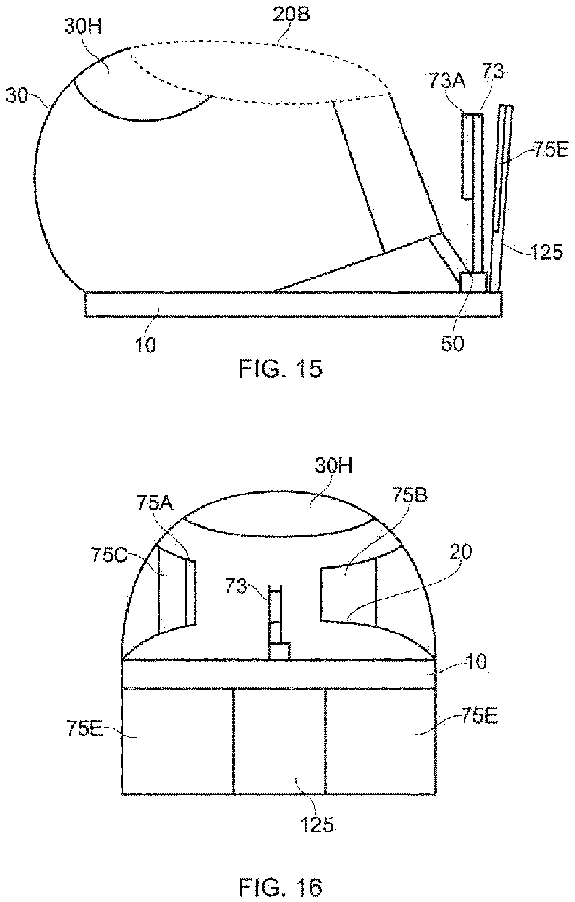

The figures 15-19 illustrate an embodiment of the present invention where the tightening mechanism is hook-and-loop fasteners. On a first side of the opening in the upper part 20 a hook-and-loop fastener 75A is arranged on the inside and on the other side of the opening a hook-and-loop fastener 75B is arranged on the outside of upper part 20. The fasteners 75A and 75B are arranged such that they can be fastened to one another over the front of the foot. On the front side of the first side of the opening a hook-and-loop fastener 75C is arranged. One end of a fastening strip 73 is secured to on of the sides of the upper part 73 and past through the attachment part 50. In the open position illustrated on figures 15 and 16 the other end of the strip 73 is free. This free end comprises a fastener 73A of the hook-and-loop type.

Also shown on the figures is the elastic heel portion 30H.

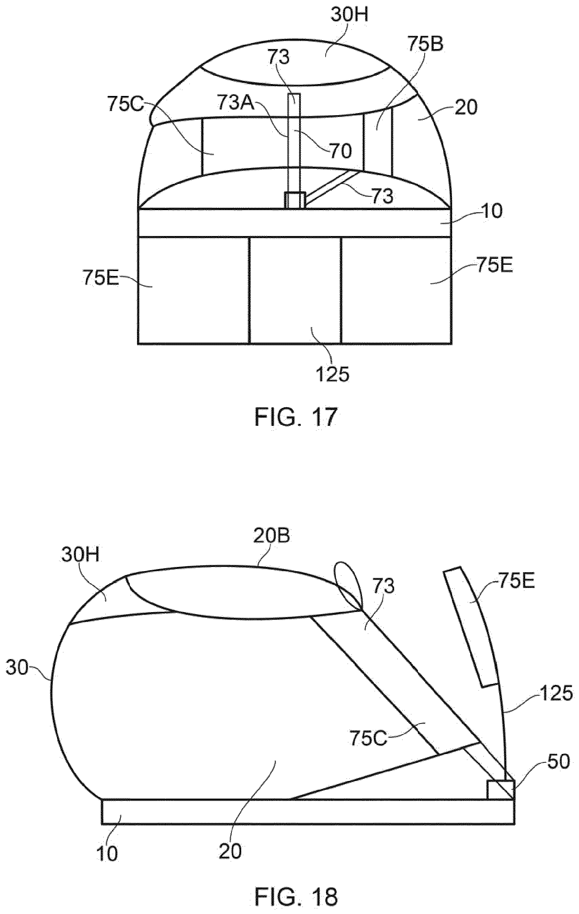

On the figures 17 and 18 the shoe is tightened but not fully in the closed position. Fasteners 75A and 75B are fastened to each other thereby tightening the upper parts of the shoe and stretching the elastic heel portion 30H against the foot and the joints. Thereafter the strip 73 has been tightened it is secured by fastening the fastened 73A to the fastener 75C, thereby drawing forward and down the upper part 20 towards the sole 10 to give a snug fit around the foot. Here the tightening in two directions is done in two separate steps after one another, first the width and thereafter the height.

This embodiment of the shoe further comprises a front cover 125 arranged to further protect the tightening mechanism and the foot from dirt and debris. Additional the front cover enclose fastenings means that engage with the other fasteners and assist in keeping all parts in a tightened position as a secondary lock.
The front cover 125 comprises one or more fasteners 75E of a hook-and-loop type on the inside thereof. When closing the front cover the fasteners 75E are brought in contact with the fasteners 75C and/or 75B.

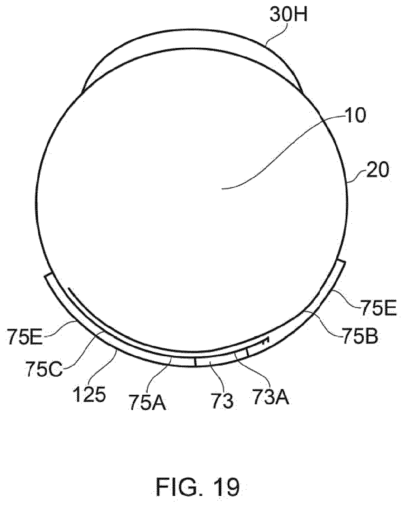

Figure 19 is a top view of the shoe after the tightening and closing of the front cover.

## Claims

1. A shoe for the foot (5) of an animal,
the shoe comprising a sole (10) and an upper part (20) that are connected to each other,
where the upper part (20) comprises an opening with a tightening mechanism (70) to tighten the shoe against the foot (5),
the tightening mechanism (70) cooperating with at least one attachment part (50) that is secured to a toe portion (15) or a heel portion (35) of the sole (10),
wherein the at least one attachment part (50) is located lower than the tightening mechanism (70) in the upper part (20) such that, on tightening, the upper part (20) is drawn down towards the sole (10) to give a snug fit around the foot (5), wherein the tightening mechanism (70) is arranged in the upper part (20) above the same toe portion (15) or heel portion (35) that the at least one attachment part (50) is secured to.

2. A shoe according to claim 1, wherein the upper part (20) is separate from the toe portion (15) or the heel portion (35) such that, on tightening, the upper part (20) fits snugly around the foot (5) independent of the diameter of the foot (5) and the foot's (5) print in the sole (10).

3. A shoe according to claim 1 or 2, wherein the sole is soft such that the upper part (20) and the sole (10), on tightening, will be drawn towards each other.

4. A shoe according to claim 1 or 2, wherein the sole (10) is hard such that, on tightening, only the upper part (20) will be drawn down towards the sole (10).

5. A shoe according to claim 1 or 2, wherein the tightening mechanism (70) consists of laces that are threaded through guiding elements (40) on either side of the opening and then through said at least one attachment part (50) in the toe portion (15) or heel portion (35) of the sole (10).

6. A shoe according to claim 1 or 2, wherein the tightening mechanism (70) consists of hook closure levers (110) that are connected to the at least one attachment part (50) in the toe portion (15) or heel portion (35) of the sole (10).

7. A shoe according to claim 1 or 2, wherein there is a friction material on the inside of the upper part (20).

8. A shoe according to claim 1 or 2, wherein the upper part (20) is made of a flexible material and/or a hard material, so that the upper part (20) fits snugly around the foot (5) independent of the geometry of the foot (5) in order to prevent rotation of the sole part of the shoe.

9. A shoe according to claim 1 or 2, wherein at least one attachment part (50) is mounted on a slide or hinge so as to allow the attachment part (50) to move in the longitudinal direction in order to reach a tightening point on the sole (10) which rests against the foot (5) independent of the size of the sole (10).

10. A shoe according to claim 1 or 2, wherein the tightening mechanism (70) comprises one or more hook-and-loop fasteners (75A, 75B, 75C) and the attachment part (50) comprises a tightening band (73) comprising a fastener (73A) for fastening to at least one of the hook-and-loop fasteners.

11. A shoe according to claim 1 or 2, wherein the shoe further comprises a front cover (125) comprising a fastener (75E) for fastening the front cover to the upper part (20).

12. A shoe according to claim 1 or 2, wherein the upper part (20) comprises an elastic heel part (30H).

## Patentansprüche

1. Schuh für den Fuss (5) eines Tiers,
wobei der Schuh eine Sohle (10) aufweist, und einen oberen Teil (20), welche miteinander verbunden sind,
wobei der obere Teil (20) eine Öffnung mit einem Straffungsmechanismus (70) aufweist, zum Festziehen des Schuhs am Fuss (5),
wobei der Straffungsmechanismus (70) mit mindestens einem Befestigungselement (50) zusammenwirkt, welches an einem Zehenbereich (15) oder einem Fersenbereich (35) der Sohle (10) befestigt ist,
wobei das mindestens eine Befestigungselement (50) im oberen Teil (20) tiefer angeordnet ist als der Straffungsmechanismus (70), sodass, bei der Straffung, der obere Teil (20) nach unten zur Sohle (10) hin gezogen wird, um einen straffen Sitz um den Fuss (5) herum zu gewährleisten, wobei der Straffungsmechanismus (70) im oberen Teil (20) oberhalb vom gleichen Zehenbereich (15) oder Fersenbereich (35) angeordnet ist, an dem das mindestens eine Befestigungselement (50) befestigt ist.

2. Schuh gemäss Anspruch 1, wobei der obere Teil (20) separat vom Zehenbereich (15) oder vom Fersenbereich (35) ausgebildet ist, sodass, bei der Straffung, der obere Teil (20) straff um den Fuss (5) herum passt, unabhängig vom Durchmesser des Fusses (5) und vom Abdruck des Fusses (5) in der Sohle (10).

3. Schuh gemäss einem der Ansprüche 1 oder 2, wobei die Sohle weich ist, sodass der obere Teil (20) und die Sohle (10) bei der Straffung zueinander hingezogen werden.

4. Schuh gemäss einem der Ansprüche 1 oder 2, wobei die Sohle hart ist, sodass, bei der Straffung nur der obere Teil (20) nach unten zur Sohle (10) hin gezogen wird.

5. Schuh gemäss einem der Ansprüche 1 oder 2, wobei der Straffungsmechanismus (70) aus Bändern besteht, welche durch Führungselemente (40) beidseits der Öffnung und dann durch das besagte mindestens eine Befestigungselement (50) im Zehenbereich (15) oder Fersenbereich (35) der Sohle (10) gefädelt sind.

6. Schuh gemäss einem der Ansprüche 1 oder 2, wobei der Straffungsmechanismus (70) aus Hakenverschlusshebeln (110) besteht, welche mit dem mindestens einen Befestigungselement (50) im Zehenbereich (15) oder Fersenbereich (35) der Sohle (10) verbunden sind.

7. Schuh gemäss einem der Ansprüche 1 oder 2, wobei ein Reibmaterial an der Innenseite des oberen Teils (20) angeordnet ist.

8. Schuh gemäss einem der Ansprüche 1 oder 2, wobei der obere Teil (20) aus einem flexiblen Material und/oder einem harten Material gebildet ist, sodass der obere Teil (20) unabhängig von der Geometrie des Fusses (5) straff um den Fuss (5) herum sitzt, um eine Rotation des Sohlenteils des Schuhs zu verhindern.

9. Schuh gemäss einem der Ansprüche 1 oder 2, wobei mindestens ein Befestigungselement (50) auf einer Laufschiene oder einem Gelenk befestigt ist, um dem Befestigungselement (50) eine Bewegung in der Längsrichtung zu ermöglichen, um einen Straffungspunkt auf der Sohle (10) zu erreichen, welcher unabhängig von der Grösse der Sohle (10) gegen den Fuss (5) anliegt.

10. Schuh gemäss einem der Ansprüche 1 oder 2, wobei der Straffungsmechanismus (70) einen oder mehrere Klettverschlüsse (75A, 75B, 75C) aufweist, und wobei das Befestigungselement (50) ein Straffungsband (73) aufweist, welches ein Befestigungsmittel (73A) zur Befestigung an mindestens einem der Klettverschlüsse aufweist.

11. Schuhe gemäss einem der Ansprüche 1 oder 2, wobei der Schuh ferner eine vordere Abdeckung (125) aufweist, welche ein Befestigungsmittel (75E) zur Befestigung der vorderen Abdeckung am oberen Teil (20) aufweist.

12. Schuhe gemäss einem der Ansprüche 1 oder 2, wobei der obere Teil (20) ein elastisches Fersenteil (30H) aufweist.

## Revendications

1. Une chaussure pour le pied (5) d'un animal,
la chaussure comprenant une semelle (10) et une partie supérieure (20), qui sont reliées l'une à l'autre, où la partie supérieure (20) comprend une ouverture avec un mécanisme de serrage (70) pour serrer la chaussure contre le pied (5),
le mécanisme de serrage (70) coopérant avec au moins une partie de fixation (50) qui est fixée à une partie de pointe (15) ou une partie talon (35) de la semelle (10),
dans laquelle l'au moins une partie de fixation (50) est située plus bas que le mécanisme de serrage (70) dans la partie supérieure (20) de telle sorte que, lors du serrage, la partie supérieure (20) est tirée vers le bas vers la semelle (10) pour un ajustement parfait autour du pied (5),
dans laquelle le mécanisme de serrage (70) est disposé dans la partie supérieure (20) au-dessus de la même partie de pointe (15) ou partie de talon (35) à laquelle l'au moins une partie de fixation (50) est fixée.

2. Une chaussure selon la revendication 1, dans laquelle la partie supérieure (20) est séparée de la partie de pointe (15) ou de la partie talon (35) de telle sorte que, lors du serrage, la partie supérieure (20) s'ajuste parfaitement autour du pied (5) indépendamment du diamètre du pied (5) et de l'empreinte du pied (5) dans la semelle (10).

3. Une chaussure selon la revendication 1 ou 2, dans laquelle la semelle est souple de telle sorte que la partie supérieure (20) et la semelle (10), lors du serrage, seront tirées l'une vers l'autre.

4. Une chaussure selon la revendication 1 ou 2, dans laquelle la semelle (10) est dure de telle sorte que lors du serrage, seule la partie supérieure (20) sera tirée vers la semelle (10).

5. Une chaussure selon la revendication 1 ou 2, dans laquelle le mécanisme de serrage (70) se compose de lacets qui sont enfilés à travers des éléments de guidage (40) de chaque côté de l'ouverture puis à travers ladite au moins une partie de fixation (50) dans le la partie de pointe (15) ou la partie talon (35) de la semelle (10).

6. Une chaussure selon la revendication 1 ou 2, dans laquelle le mécanisme de serrage (70) consiste en des leviers de fermeture à crochet (110) qui sont connectés à l'au moins une partie de fixation (50) dans la partie de pointe (15) ou la partie talon (35) de la semelle (10).

7. Une chaussure selon la revendication 1 ou 2, dans laquelle il y a un matériau de friction à l'intérieur de la partie supérieure (20).

8. Une chaussure selon la revendication 1 ou 2, dans laquelle la partie supérieure (20) est faite d'un matériau flexible et / ou d'un matériau dur, de telle sorte que la partie supérieure (20) s'ajuste parfaitement autour du pied (5) indépendamment de la géométrie du pied (5) pour empêcher la rotation de la partie de semelle de la chaussure.

9. Une chaussure selon la revendication 1 ou 2, dans laquelle au moins une partie de fixation (50) est montée sur une glissière ou une charnière de manière à permettre à la partie de fixation (50) de se déplacer dans le sens longitudinal pour atteindre un point de serrage sur la semelle (10) qui repose contre le pied (5) indépendamment de la taille de la semelle (10).

10. Une chaussure selon la revendication 1 ou 2, dans laquelle le mécanisme de serrage (70) comprend une ou plusieurs attaches à crochets et boucles (75A, 75B, 75C) et la partie de fixation (50) comprend une bande de serrage (73) comprenant une attache (73A) pour la fixation à au moins une des attaches à crochets et boucles.

11. Une chaussure selon la revendication 1 ou 2, dans laquelle la chaussure comprend en outre une couverture avant (125) comprenant une attache (75E) pour fixer la couverture avant à la partie supérieure (20).

12. Une chaussure selon la revendication 1 ou 2, dans laquelle la partie supérieure (20) comprend une partie de talon élastique (30H).
